(19) **Europäisches Patentamt / European Patent Office / Office européen des brevets**

(11) **EP 1 973 073 A1**

(12) **EUROPEAN PATENT APPLICATION**

(43) Date of publication:
**24.09.2008 Bulletin 2008/39**

(51) Int Cl.:
*G06Q 30/00* (2006.01)      *G06F 17/30* (2006.01)

(21) Application number: **07104594.2**

(22) Date of filing: **21.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **The European Community, represented by the**
**European Commission**
**1049 Brussels (BE)**

(72) Inventors:
• **Best, Clive**
 **21014 Laveno-Mombello (VA) (IT)**

• **Van der Goot, Erik**
 **21023 Besozzo (IT)**
• **Horby, David**
 **St. Albans**
 **Hertfordshire AL3 4JU (GB)**

(74) Representative: **Beissel, Jean et al**
 **Office Ernest T. Freylinger S.A.,**
 **234, route d'Arlon,**
 **B.P. 48**
 **8001 Strassen (LU)**

(54) **A method for early warning detection by monitoring internet reports**

(57)    A method for the generation of early warning alerts in a media monitoring system, comprises:
receiving incoming articles from a plurality of information sources across a network;
analysing said incoming articles in order to determine whether said articles are related to one or more topics defined in a database of said media monitoring system;
for a specific topic to be monitored,
determining the number of incoming articles relating to that specific topic within a unitary time interval;
calculating an average count for the number of incoming articles relating to that specific topic for a predetermined number of past unitary time intervals; and
setting an alert level for said topic if the number of incoming articles relating to that specific topic within the current unitary time interval exceeds the average count by a predetermined amount or order of magnitude.

EP 1 973 073 A1

## Description

### Technical field

The present invention generally relates to the technical field of media monitoring systems and more specifically to a method for early warning detection in such media monitoring systems.

### Background Art

Media monitoring systems are typically configured to scan a plurality of information sources across a network for new articles and analysing the incoming articles according to their content in order to associate the articles to a specific topic or thread in an information database.

Internet based media monitoring systems are able to detect new articles and postings within minutes of publication across multiple sites. The Europe Media Monitor is one example of such an internet based media monitoring system, in which articles are automatically detected across many major on-line media sites as they are published, and then filtered according to topic specific lists of keyword combinations.

The subject of topic detection and tracking in news has been the object of many studies in the past. Most systems use a clustering method to identify topics within a set of news articles. Breaking News is then identified as topics (clusters) which suddenly appear. Google™ News uses such an approach. While this gives good quality results it requires significant time for the cluster to grow, be identified and marked as breaking news above other news stories. The Europe Media Monitor uses such an approach for the daily news analysis. However, for early warning on identified threats and rapid breaking news detection this approach is too slow for rapid alerting, and is too insensitive for pre-identified threats.

### Technical problem

It is therefore an object of the present invention to provide a faster and leaner method for the early warning on identified threats. This object is achieved by a method for the generation of early warning alerts in a media monitoring system as claimed in claim 1 or a media monitoring system as claimed in claim 8 respectively.

### General Description of the Invention

To achieve the above mentioned object, the present invention proposes a method for the generation of early warning alerts in a media monitoring system, comprising:

receiving incoming articles from a plurality of information sources across a network;

analysing said incoming articles in order to determine whether said articles are related to one or more topics defined in a database of said media monitoring system;

for a specific topic to be monitored,

determining the number of incoming articles relating to that specific topic within a unitary time interval;

calculating an average count for the number of incoming articles relating to that specific topic for a predetermined number of past unitary time intervals; and

setting an alert level for said topic if the number of incoming articles relating to that specific topic within the current unitary time interval exceeds the average count by a predetermined amount or order of magnitude.

In preferred embodiment of the invention, an alert level is set if the ratio of the number of incoming articles relating to the specific topic to be monitored to the average count exceeds a predetermined threshold. Also according to one embodiment, the setting of an alert level comprises the setting of one of a plurality of possible alert levels depending on the divergence between the number of incoming articles relating to the specific topic to be monitored and the average count.

The method of the present invention may e.g. be used for identifying potential threats to public health and safety by generating an early warning alert once the frequency of occurrence of a specific topic or threat suddenly increases.

Many studies have been made to identify and classify potential threats to public health and safety. Each identified threat can be described by typical keywords and synonyms. An article can be classified as discussing one of these threats (i.e. as relating to the corresponding topic) if some of these keywords appear in some specified combination or overlap. Finite state software can then process thousands of articles classifying each according to whether the threat criteria are met. The Europe Media Monitor alert system e.g. uses this technique.

In a real life situation, there will always be reports about hypothetical risks and each threat or topic can be classified by a background frequency of occurrence. However when a real incident occurs or is avoided then there is a sudden increase of articles concerning that threat. This sudden increase can happen at any time and originate from any part of the world. The Early warning method as described hereinabove is able to respond to this increase within one unitary time interval of first reports.

The proposed method covers basically the following stages:

Detecting the topic of an incoming article. Each threat is e.g. characterized by a list of multilingual keywords, which classifies the risk concerned. The Europe Media Monitor Alert system for instance is one such real time topic filtering system.

Alert or Topic Statistics. Each article, which passes the topic selection, must be counted within a certain time frame. If the unitary time interval is e.g. set to be 1 hour the system preferably records 24 hourly count values for each threat each day.

The early warning algorithm itself, which must be tuned to avoid false hits but not miss real incidents. Let $n_c(t)$ be the number of articles in category c, (i.e. articles relating to a specific topic corresponding to category c), then the method preferably calculates a rolling hourly average over m-days as

$$\langle n_c \rangle = \frac{\sum_1^m \sum_1^{24} n_c(t)}{24 * m}$$

In a preferred embodiment of the method, the alert level may e.g. then be set to

- "Elevated": if $n_c(t)$ at the current time t $> \langle n_c \rangle$, i.e. if $n_c(t) > 5$,

- "High": if $\dfrac{n_c(t)}{\langle n_c \rangle} > 10$

- "Very High": if $\dfrac{n_c(t)}{\langle n_c \rangle} > 20$

It will be appreciated that the method of the present invention takes into account that, in normal times, some topics are much more present in the different news sources than other topics. Due to the comparison of the actual article count with the average count for the specific topic, the method of the present invention advantageously compensates for the differences of baseline occurrence between the different topics of interest.

It will further be noted that the different topics may be characterized by a number of multi-lingual keywords. In this case, the method is able to analyze the articles independently of the language of the article and to generate an alarm or set an alarm level on a global, multi-language level. Example applications of such a method include e.g. disease outbreak monitoring, manmade or natural disaster monitoring, acts of terrorism, and monitoring news reports on people.

In a preferred embodiment, the method further comprises the sending of an alarm message in accordance with the set alert level to one or more users. The alarm may e.g. be sent by e-mail via the Internet, by SMS via a wireless telecommunications network, or by any other suitable means.

In a preferred embodiment of the invention, the method further comprises the correlation of the set alert level to a geographical location. The correlation of an alert level to a geographical location may e.g. comprise the analysis of said incoming articles in order to determine a geographical location associated to the topic of said article and the calculation of an alert level parameter for a specific country and topic, said alert level parameter indicating the ratio of the number of articles relating to the specific topic and said country and the total number of articles relating to said topic.

The goal is to cross correlate early warning in a given risk to a place on earth. Geocoding software identifies places and countries mentioned in each text and derives their latitude and longitude. Early Warning maps correlate which country the reports are mentioning. The method described here is based on correlation statistics of a risk topic AND a country. For a given time period the countries most associated with a given early warning are measured by the alert level parameter $I(C,T)$, which may e.g. by calculated by the formula:

$$I(C,T) = \frac{N(C,T)}{N(T)},$$

where $N(C,T)$ are the number of reports geocoded to country C and classified in the risk topic, $N(T)$ are the total number of reports in the risk topic. By comparing the alert level parameters $I(C,T)$ for all the countries of a given region or of the world, one can easily determine the origin of a specific treat or topic.

Further to the above features, the alert generating method may comprise steps for the detection of unexpected events or topics. Such an algorithm is intended to cover the unexpected events, which are not preclassified as one of the known risks. Typically this is a breaking news story in general. The algorithm assumes that each breaking news story will refer to at least one proper noun (called here an entity). A sudden increase in the usage of an entity or the sudden appearance of a new entity should trigger an early warning. However, it is just the initial rise that should trigger the alert and not the follow up news reports. Hence a noise suppression factor is included to dampen the secondary waves of news concerning the same event. The algorithm should also work in any language.

Accordingly, in a preferred embodiment the method further comprises the analysis of said incoming articles in order to determine an entity to which said article relates and, for each entity so determined, the calculation of a normalized news score S according to the formula:

$$S = \frac{n_t}{\overline{n_t}} * \beta * \frac{n_F}{N_F},$$

where

- $n_t$ = number of occurrences of said topic within the current unitary time interval

- $\overline{n_t}$ = rolling average over a predetermined number of past unitary time intervals of the number of occurrences of topic per unitary time interval

- $\beta$ = multiplying coefficient

- $n_F$ = number of feeds (sources) from which the topics are derived

- $N_F$ = feed scaling coefficient

If the normalized news score S exceeds a predetermined threshold, a specific alarm level may be set or an alarm may be generated. The parameters in the above formula may be tuned by studying past breaking news events. A possible configuration of these parameters is e.g. $\beta = 2$ and $N_F = 4$ (to suppress news with less than 4 independent sources). Although the time interval may be one hour for statistics, the calculation of normalized news score is preferably made more frequently. This therefore picks up a large breaking news event within the first hour. Furthermore, a list of stop words is preferably kept for each language to avoid spurious triggers.

It will be appreciated that the present invention also relates to media monitoring system with alert generation means. Such media monitoring system, comprises:

at least one computer for receiving incoming articles from a plurality of information sources across a network and for analysing said incoming articles in order to determine whether said articles are related to one or more topics defined in a database of said media monitoring system;

processor means for determining, for a specific topic to be monitored, the number of incoming articles relating to that specific topic within a unitary time interval;

processor means for calculating an average count for the number of incoming articles relating to that specific topic for a predetermined number of previous unitary intervals; and

processor means for setting an alert level for said topic if the number of incoming articles relating to that specific topic within the current unitary time interval exceeds the average count by a predetermined amount or magnitude.

The alert level is e.g. set if the ratio of the number of incoming articles relating to the specific topic to be monitored to the average count exceeds a predetermined threshold.

In a preferred embodiment of the media monitoring system, said processor means for setting an alert level comprises means for setting of one of a plurality of possible alert levels depending on the divergence between the number of incoming articles relating to the specific topic to be monitored and the average count. Furthermore, the media monitoring system advantageously comprises means for sending of an alarm message in accordance with the set alert level to one or more users.

In a preferred embodiment the media monitoring system further comprises means for the correlation of the set alert level to a geographical location. These means for the correlation of an alert level to a geographical location preferably comprise processing means for analysing said incoming articles in order to determine a geographical location associated to the topic of said article and processing means for the calculation of an alert level parameter for a specific country and topic, said alert level parameter indicating the ratio of the number of articles relating to the specific topic and said country and the total number of articles relating to said topic.

Finally the media monitoring system advantageously comprises processing means for analyzing said incoming articles in order to determine an entity to which said article relates and, for each entity so determined, the calculation of a normalized news score S according to the formula:

$$S = \frac{n_t}{\overline{n_t}} * \beta * \frac{n_F}{N_F},$$

where

- $n_t$ = number of occurrences of said topic within the current unitary time interval

- $\overline{n_t}$ = rolling average over a predetermined number of past unitary time intervals of the number of occurrences of topic per unitary time interval

- $\beta$ = multiplying coefficient

- $n_F$ = number of feeds (sources) from which the topics are derived

- $N_F$ = feed scaling coefficient

**Claims**

1. A method for the generation of early warning alerts in a media monitoring system, comprising:

receiving incoming articles from a plurality of information sources across a network;
analysing said incoming articles in order to determine whether said articles are related to one or more topics defined in a database of said media monitoring system;
for a specific topic to be monitored,

> determining the number of incoming articles relating to that specific topic within a unitary time interval;
> calculating an average count for the number of incoming articles relating to that specific topic for a predetermined number of past unitary time intervals; and
> setting an alert level for said topic if the number of incoming articles relating to that specific topic within the current unitary time interval exceeds the average count by a predetermined amount or order of magnitude.

2. A method for the generation of early warning alerts according to claim 1, wherein an alert level is set if the ratio of the number of incoming articles relating to the specific topic to be monitored to the average count exceeds a predetermined threshold.

3. A method for the generation of early warning alerts according to claim 1 or 2, wherein the setting of an alert level comprises the setting of one of a plurality of possible alert levels depending on the divergence between the number of incoming articles relating to the specific topic to be monitored and the average count.

4. A method for the generation of early warning alerts according to any one of claims 1 to 3, further comprising the sending of an alarm message in accordance with the set alert level to one or more users.

5. A method for the generation of early warning alerts according to any one of claims 1 to 4, further comprising the correlation of the set alert level to a geographical location.

6. A method for the generation of early warning alerts according to claim 5, wherein the correlation of an alert level to a geographical location comprises the analysis of said incoming articles in order to determine a geographical location associated to the topic of said article and the calculation of an alert level parameter for a specific country and topic, said alert level parameter indicating the ratio of the number of articles relating to the specific topic and said country and the total number of articles relating to said topic.

7. A method for the generation of early warning alerts according to any one of claims 1 to 6, further comprising the analysis of said incoming articles in order to determine an entity to which said article relates and, for each entity so determined, the calculation of a normalized news score S according to the formula:

$$S = \frac{n_t}{\overline{n_t}} * \beta * \frac{n_F}{N_F},$$

where

> • $n_t$ = number of occurrences of said topic within the current unitary time interval
> • $\overline{n_t}$ = rolling average over a predetermined number of past unitary time intervals of the number of occurrences of topic per unitary time interval
> • $\beta$ = multiplying coefficient
> • $n_F$ = number of feeds (sources) from which the topics are derived
> • $N_F$ = feed scaling coefficient

8. A media monitoring system, comprising:

> at least one computer for receiving incoming articles from a plurality of information sources across a network and for analysing said incoming articles in order to determine whether said articles are related to one or more topics defined in a database of said media monitoring system;
> processor means for determining, for a specific topic to be monitored, the number of incoming articles relating to that specific topic within a unitary time interval;
> processor means for calculating an average count for the number of incoming articles relating to that specific topic for a predetermined number of previous unitary intervals; and
> processor means for setting an alert level for said topic if the number of incoming articles relating to that specific topic within the current unitary time interval exceeds the average count by a predetermined amount or magnitude.

9. A media monitoring system according to claim 8, wherein an alert level is set if the ratio of the number of incoming articles relating to the specific topic to be monitored to the average count exceeds a predetermined threshold.

10. A media monitoring system according to claim 8 or 9, wherein said processor means for setting an alert level comprises means for setting of one of a plurality of possible alert levels depending on the divergence between the number of incoming articles relating to the specific topic to be monitored and the average count.

11. A media monitoring system according to any one of claims 8 to 10, further comprising means for sending of an alarm message in accordance with the set alert level to one or more users.

12. A media monitoring system according to any one of claims 8 to 11, further comprising means for the correlation of the set alert level to a geographical location.

13. A media monitoring system according to claim 12, wherein the means for the correlation of an alert level to a geographical location comprises processing means for analysing said incoming articles in order to determine a geographical location associated to the topic of said article and processing means for the calculation of an alert level parameter for a specific country and topic, said alert level parameter indicating the ratio of the number of articles relating to the specific topic and said country and the total number of articles relating to said topic.

14. A media monitoring system according to any one of claims 8 to 13, further comprising processing means for analyzing said incoming articles in order to determine an entity to which said article relates and, for each entity so determined, the calculation of a normalized news score S according to the formula:

$$S = \frac{n_t}{\overline{n_t}} * \beta * \frac{n_F}{N_F},$$

where

- $n_t$ = number of occurrences of said topic within the current unitary time interval
- $\overline{n_t}$ = rolling average over a predetermined number of past unitary time intervals of the number of occurrences of topic per unitary time interval
- $\beta$ = multiplying coefficient
- $n_F$ = number of feeds (sources) from which the topics are derived
- $N_F$ = feed scaling coefficient

**European Patent Office**

**DECLARATION**

which under Rule 45 of the European Patent Convention shall be considered, for the purposes of subsequent proceedings, as the European search report

Application Number

EP 07 10 4594

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>The claimed subject-matter, interpreted using the description and drawings in accordance with Article 69(c), relates to procecces comprised in the list of subject-matter and activities excluded from patentability under Article 52(2) and (3) EPC for which information technology is employed as an enabler for carrying out said process. The employed information technology is notorious and its use for carrying out non-technical processes forms part of common general knowledge. It was widely available to the public at the date of filing of the present application and therefore no documentary evidence is required.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br><br>----- | INV.<br>G06Q30/00<br>G06F17/30 |

| Place of search | Date | Examiner |
|---|---|---|
| Munich | 28 August 2007 | König, Wolfgang |

EPO FORM 1504 (P04C37)